# EUROPEAN PATENT APPLICATION

(11) **EP 1 967 858 A1**
(43) Date of publication of application: **10.09.2008**
(21) Application number: 06823407.9
(22) Date of filing: 15.11.2006
(51) Int. Cl.: G01N 35/02, B01F 11/02, B01J 19/10

(54) **REACTION VESSEL AND ANALYZER**

(30) Priority: 28.12.2005 JP 2005380449
(71) Applicant: Olympus Corporation, Tokyo 151-0072 (JP)
(72) Inventor: MURAKAMI, Miyuki c/o Olympus Corporation, Tokyo 151-0072 (JP)
(74) Representative: von Hellfeld, Axel
(86) International application number: PCT/JP2006/322753
(87) International publication number: WO 2007/077684

(57) **Abstract**

A reaction container and an analyzing apparatus that hold a liquid agitated by sound waves. The reaction container (7) has two openings (8c) serving as an introduction/discharge port of a liquid, and a holding member (8) having the two openings, holding the liquid between the two openings, and including a sound wave generator arranged on a side surface or a portion close to the side surface for emitting sound waves to a portion between the openings to agitate the liquid. Two openings (8c) are arranged opposite to each other. The holding member (8) is arranged in a vertical direction, and a lower one of the openings (8c) in the vertical direction has a smaller area than an upper one of the openings (8c) in the vertical direction.

## Description

### TECHNICAL FIELD

The present invention relates to a reaction container and an analyzing apparatus.

### BACKGROUND ART

Conventional analyzing apparatuses agitate liquid held in a reaction container utilizing sound waves generated by a sound wave generator arranged outside (see Patent Document 1, for example).

Patent Document 1: Japanese Patent No. 3168886

### DISCLOSURE OF INVENTION

### PROBLEM TO BE SOLVED BY THE INVENTION

A reaction container used in the analyzing apparatus is a rectangular-column-like container called cuvette and has an opening in an upper portion. When the amount of liquid is very small, for example, approximately a few µL to a few tens µL, the size of the reaction container is required to be very small, so as to alleviate pain of a subject. When the size of the reaction container is very small, the area of the opening from which a liquid such as specimen, reagent, and cleaning liquid is introduced becomes relatively small because a photometric region must be secured for an analysis. When a liquid is dropped by liquid dispensing, for example, onto the opening of such a reaction container of a very small size, the liquid adheres to the opening due to surface tension and the introduction of the liquid into the container is hampered.

The present invention is made in view of the above, and an object of the present invention is to provide a reaction container which allows easy introduction of a liquid at dispensing, washing, and the like even when the size of the reaction container is very small, and an analyzing apparatus which allows easy introduction of a liquid from the reaction container.

### MEANS FOR SOLVING PROBLEM

To solve the problems as described above and to achieve an object, a reaction container according to one aspect of the present invention holds a liquid agitated by sound waves, and includes two openings which serve as an introduction/discharge port of the liquid, and a holding member which has the two openings, holds the liquid between the two openings, and includes a sound wave generator arranged on one of a side surface and a portion close to the side surface for emitting sound waves to a portion between the two openings to agitate the liquid.

Further, in the reaction container according to one aspect of the present invention, in the invention as described above, the two openings are arranged opposite to each other.

Further, in the reaction container according to one aspect of the present invention, in the invention as described above, the holding member is arranged in a vertical direction, and a lower one of the two openings in the vertical direction has an area smaller than an area of an upper one of the two openings in the vertical direction.

Further, in the reaction container according to one aspect of the present invention, in the invention as described above, the holding member has such a contact angle that a size of a vertical component of a surface tension of the liquid is equal to or larger than a gravitational force working on the liquid held.

Further, in the reaction container according to one aspect of the present invention, in the invention as described above, the liquid is introduced into the holding member from one of the openings by a capillarity pressure.

Further, in the reaction container according to one aspect of the present invention, in the invention as described above, the liquid is discharged from the holding member from another one of the openings different from the one from which the liquid is introduced.

Further, in the reaction container according to one aspect of the present invention, in the invention as described above, the holding member includes at least two side walls parallel to each other for defining a light path length of light passing through the liquid held.

Further, in the reaction container according to one aspect of the present invention, in the invention as described above, an inner surface of the holding member has a higher affinity with the liquid than other portions of the holding member.

Further, in the reaction container according to one aspect of the present invention, in the invention as described above, the sound wave generator is arranged in such a manner that the sound wave generator can be brought close to and away from the holding member by a contact.

Further, in the reaction container according to one aspect of the present invention, in the invention as described above, the sound wave generator is a surface-acoustic-wave element.

Further, to solve the problems as described above and to achieve an object, an analyzing apparatus according to one aspect of the present invention agitates plural different types of liquid to cause reaction, measures an optical characteristic of an obtained reaction liquid, and analyzes the reaction liquid, and the analyzing apparatus uses the reaction container as described above to agitate the plural different types of liquid to cause reaction and optically analyze the reaction liquid.

Further, the analyzing apparatus according to one aspect of the present invention, in the invention as described above, further includes a discharging unit that discharges the liquid held by the holding member, and the discharging unit is shared by the plural reaction containers.

Further, in the analyzing apparatus according to one aspect of the present invention, in the invention as described above, the discharging unit is a pressure applying unit which discharges the liquid held by the holding member by fluid pressure.

### EFFECT OF THE INVENTION

Since the reaction container of the present invention includes the holding member which has two openings as introduction/discharge ports of the liquid, the liquid can be easily introduced. Further, since the analyzing apparatus of the present invention employs the reaction container as described above, the liquid can be easily introduced. Further, since the introduced liquid is discharged by fluid pressure, in addition to the easy introduction of liquid, the generation of carryover can be suppressed.

### BRIEF DESCRIPTION OF DRAWINGS

FIG. 1 is a schematic configuration diagram of an automatic analyzing apparatus according to a first embodiment;
FIG. 2 is a perspective view of a reaction container according to the first embodiment and a part of a reaction wheel shown together with a schematic configuration diagram of an agitation device;
FIG. 3 is a side view of a reagent dispensed by a reagent dispensing mechanism onto an affinity region of a recess formed on the reaction wheel;
FIG. 4 is a side view of a section of a liquid held in a semi-spherical shape on the affinity region at a bottom surface of the recess and the reaction container inserted into the recess;
FIG. 5 is a side view of a liquid introduced inside from an opening of a holding member due to surface tension as the reaction container is inserted into the recess;
FIG. 6 is a side view schematically showing how photometry is performed on a liquid held by the holding member of the reaction container using a light flux emitted from a light source;
FIG. 7 is a sectional view of an arrangement of the holding member and a pressurization nozzle when a reaction liquid held by the holding member of the reaction container is discharged by the pressurization nozzle;
FIG. 8 is a sectional view of a state where the reaction liquid held by the holding member is discharged by pressurized air discharged from the pressurization nozzle;
FIG. 9 is a sectional view showing how the holding member after discharge of the reaction liquid is washed by a cleaning liquid flowing down inside the holding member;
FIG. 10 is a sectional view of a first modification of a holding member employed in the reaction container of the first embodiment;
FIG. 11 is a perspective view of a second modification of the holding member employed in the reaction container of the first embodiment;
FIG. 12 is a sectional view of the reaction container shown in FIG. 11;
FIG. 13 is a sectional view of another modification of the reaction container shown in FIG. 11;
FIG. 14 is a sectional view of a third modification of the holding member employed in the reaction container of the first embodiment;
FIG. 15 is a sectional view of a fourth modification of the holding member employed in the reaction container of the first embodiment;
FIG. 16 is a sectional view of a recess of a reaction wheel shown together with a schematic configuration diagram of an agitation device so as to illustrate a modification where power is supplied by a contact to a surface-acoustic-wave element;
FIG. 17 is a front view of another example of the surface-acoustic-wave element employed in the reaction container shown in FIG. 16;
FIG. 18 is a perspective view of a reaction container of a second embodiment and a part of a reaction wheel shown together with a schematic configuration diagram of an agitation device;
FIG. 19 is a sectional view showing how a reagent is dispensed to the holding member of the reaction container of the second embodiment;
FIG. 20 is a sectional view of an initial state after the reagent is dispensed to the holding member of FIG. 19;
FIG. 21 is a sectional view of a state where the reagent and specimen dispensed to the holding member are agitated;
FIG. 22 is a sectional view of a state where a reaction liquid obtained as a result of agitation and reaction of the reagent and the specimen is subjected to photometry;
FIG. 23 is a block diagram of a configuration of an automatic analyzing apparatus of a third embodiment where a reaction container and a reaction table are shown in section:
FIG. 24 is a plan view of a part of the reaction table employed in the automatic analyzing apparatus of FIG. 23 shown together with a surface-acoustic-wave element and a driving device;
FIG. 25 is a perspective view of an arrangement of a holder, the reaction container, and the surface-acoustic-wave element of the reaction table forming the automatic analyzing apparatus of FIG. 23;
FIG. 26 is a sectional view of an arrangement of the holder, the reaction container, and the surface-acoustic-wave element forming the automatic analyzing apparatus of FIG. 23 and an acoustic matching liquid dispensed to the surface-acoustic-wave element;
FIG. 27 is a sectional view corresponding to FIG. 26 showing a state where the surface-acoustic-wave element is brought into contact with a side wall of the reaction container via a contact window formed in the holder;
FIG. 28 is a sectional view corresponding to FIG. 26 showing a modification of the holder;
FIG. 29 is a perspective view of a reaction container of a fourth embodiment;
FIG. 30 is a perspective view of the reaction container of FIG. 29 shown together with a holder holding the reaction container;
FIG. 31 is a front view of a surface-acoustic-wave element employed in the reaction container shown in FIG. 29;
FIG. 32 is a perspective view of a modification of a reaction container of the fourth embodiment;
FIG. 33 is a schematic configuration diagram showing how power to drive a transducer is supplied to a surface-acoustic-wave element by radio in the reaction container shown in FIG. 32; and
FIG. 34 is a front view of a modification of the surface-acoustic-wave element employed in the reaction container of the fourth embodiment.

### EXPLANATIONS OF LETTERS OR NUMERALS

- 1: Automatic analyzing apparatus
- 2: Work table
- 3: Specimen table
- 4: Specimen container
- 5: Specimen dispensing mechanism
- 6: Reaction wheel
- 7: Reaction container
- 8, 8A,: 8B Holding member
- 8C: Holding member
- 8c: Opening
- 9: Surface-acoustic-wave element
- 10: Photometer unit
- 10a: Light source
- 10b: Light receiving unit
- 11: Washing device
- 12: Reagent dispensing mechanism
- 13: Reagent table
- 14: Reagent container
- 15: Reader device
- 16: Control unit
- 17: Analyzing unit
- 18: Input unit
- 19: Display unit
- 20: Driving device
- 21: Power transmitting body
- 30: Automatic analyzing apparatus
- 31: Specimen dispensing unit
- 32: Reagent dispensing unit
- 33: Reaction table
- 34: Driving motor
- 33a: Holder
- 33c: Contact window
- 33e: Photometric window
- 35: Reaction container
- 36: Surface-acoustic-wave element
- 37: Liquid dispensing unit
- 38: Photometer unit
- 38a: Light source
- 38b: Light receiving unit
- 39: Control unit
- 40: Agitating unit
- 41: Motor
- 42: Driving circuit
- 50: Reaction container
- 51: Holding member
- 51a, 51b: Opening
- 52: Surface-acoustic-wave-element
- 53: Holder
- 54: Lid

### BEST MODE(S) FOR CARRYING OUT THE INVENTION

### First Embodiment

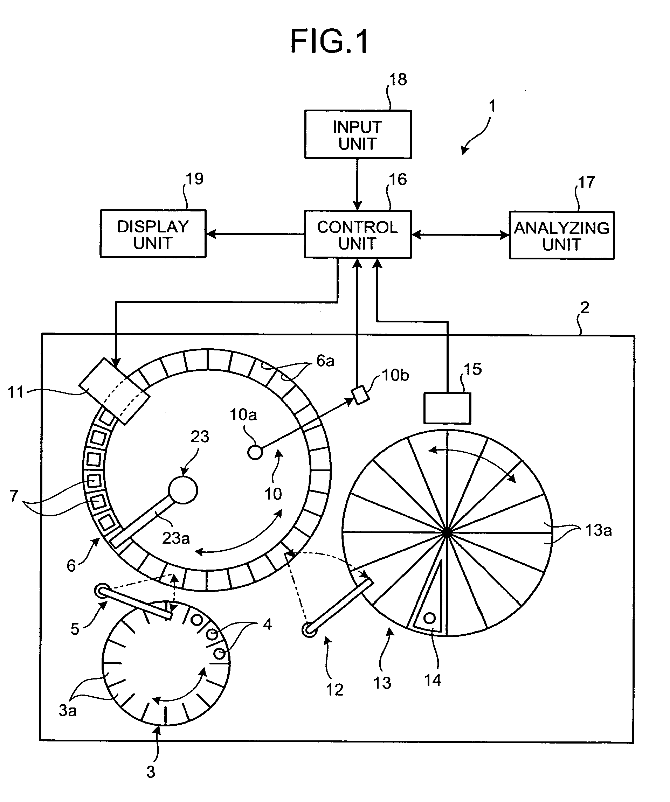

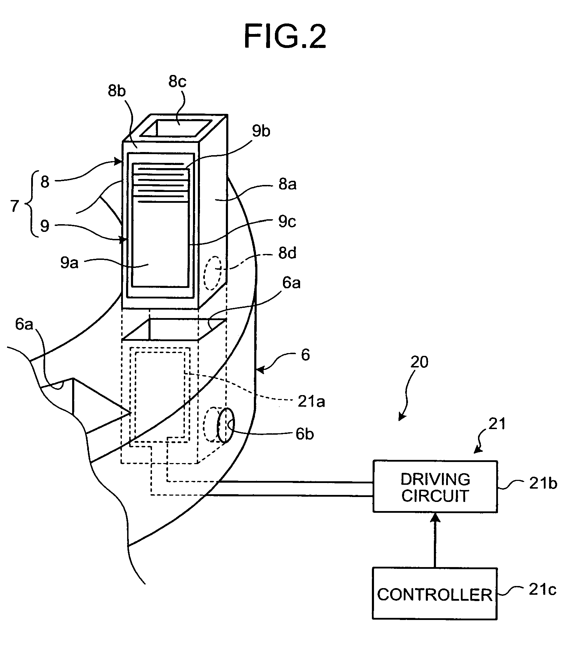

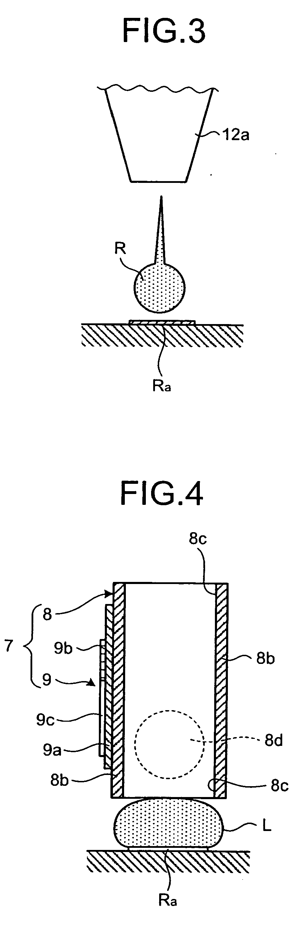

A first embodiment of a reaction container and an analyzing apparatus according to the present invention will be described in detail below with reference to the accompanying drawings. FIG. 1 is a schematic configuration diagram of an automatic analyzing apparatus of the first embodiment. FIG. 2 is a perspective view of a reaction container of the first embodiment and a part of a reaction wheel shown together with a schematic configuration diagram of an agitation device. FIG. 3 is a side view of a reagent dispensed by a reagent dispensing mechanism to an affinity region of a recess provided in the reaction wheel.

An automatic analyzing apparatus 1 includes as shown in FIG. 1, on a work table 2, a specimen table 3, a specimen dispensing mechanism 5, a reaction wheel 6, a photometer unit 10, a washing device 11, a reagent dispensing mechanism 12, a reagent table 13, and an insertion mechanism 23, and further includes a driving device 20.

The specimen table 3, as shown in FIG. 1, is rotated by a driving unit in a direction indicated by an arrow, and has plural storage chambers 3a arranged at an outer periphery equiangularly in a circumferential direction. In each storage chamber 3a, a specimen container 4 holding a specimen is stored in a detachable manner.

The specimen dispensing mechanism 5 is a unit for dispensing a specimen to a center of a recess 6a formed on the reaction wheel 6. As shown in FIG. 1, the specimen dispensing mechanism 5 sequentially dispenses the specimens from the plural specimen containers 4 on the specimen table 3 to the recesses 6a.

The reaction wheel 6 is, as shown in FIG. 1, rotated by a driving unit different from the one for the specimen table 3 in a direction indicated by an arrow, and has plural recesses 6a arranged at an outer periphery equiangularly in a circumferential direction. In the reaction wheel 6, an opening 6b (see FIG. 2) is formed in each of the recesses 6a at each of two sides in a radial direction so as to transmit the light. In the recess 6a, an affinity treatment is performed on a central portion of a bottom surface for liquids such as a specimen and a reagent, whereas a non-affinity treatment is performed on other portions, so that an affinity region Ra (FIG. 3) is formed. In each of the recesses 6a, a reaction container 7 in which a specimen and a reagent are made to react with each other is inserted by an insertion mechanism 23 in a detachable manner. The reaction wheel 6 rotates by an amount corresponding to (1 round - 1 reaction container)/4 in one cycle in a clockwise direction, and rotates by an amount corresponding to one recess 6a in four cycles in an anticlockwise direction. Near the reaction wheel 6, the photometer unit 10 and the washing device 11 are arranged.

The reaction container 7 is a very small container of approximately a few nL to a few tens µL in volume, and includes a holding member 8 and a surface-acoustic-wave element 9 as shown in FIG. 2.

The holding member 8 is made of a transparent material which transmits at least 80% of the light included in an analyzing light (340 nm to 800 nm) emitted from the photometer unit 10, such as glass including heat resistance glass, and synthetic resin such as cyclic olefin, and polystyrene. The holding member 8, as shown in FIG. 2, has openings 8c arranged opposite to each other at two ends in a longitudinal direction of side walls 8a and side walls 8b, and is a rectangular-column-like holding member serving to hold a liquid between the openings 8c. The side walls 8a and 8b are each one set of parallel walls. The holding member 8 is arranged in the recess 6a so that the side wall 8a faces the radial direction of the reaction wheel 6 and the side wall 8b faces the circumferential direction of the reaction wheel 6.

Here, the holding member 8 is molded so that the opening 8c arranged at a lower side has an area of 0.1 to 20 mm² so as to allow a liquid dispensed to the recess 6a to be introduced inside by capillarity pressure. If necessary, an affinity treatment is performed on an inner surface of the holding member 8 for a liquid such as a specimen and a reagent. When the opening 8c has an area larger than 20 mm², sufficient capillarity pressure cannot be produced. On the other hand, when the opening 8c has an area smaller than 0.1 mm², it becomes difficult to discharge the held liquid and the discharge also takes time, which is unfavorable. Hence, the area of the opening 8c is set preferably within a range of 1 to 15 mm², and most preferably within a range of 3 to 10 mm². A lower portion of the side wall 8a of the holding member 8 is utilized as a window 8d (see FIG. 2) to transmit the analyzing light.

As the holding member 8, a member having such a contact angle that makes a size of a vertical component of a surface tension T (=T-cosθ·L) applied by a held liquid equal to or larger than a gravitational force working on the liquid (=ρ·g·H·S) is employed. Here, the contact angle between the holding member 8 and the held liquid is represented as θ, length of an air-liquid interface between the liquid and the holding member 8 along the circumferential direction as L, density of the liquid as p, gravitational acceleration as g, length in the vertical direction of the liquid held by the holding member 8 as H, and a sectional area in a horizontal direction of the liquid held by the holding member 8 as S. When the holding member 8 has contact angle θ which satisfies the relation as mentioned above, the surface tension is equal to or larger than the gravitational force, and therefore, the holding member 8 can hold the liquid.

The surface-acoustic-wave element 9 is a sound wave generator which agitates the liquid by sound waves (acoustic waves) and agitates the liquid introduced by the capillarity pressure. The surface-acoustic-wave element 9 is attached to the side wall 8b of the holding member 8 as shown in FIG. 2 via an acoustic matching layer of epoxy resin or the like. The surface-acoustic-wave element 9 includes a transducer 9b formed of an interdigital transducer (IDT) and an antenna 9c both formed on a piezoelectric substrate 9a of a material such as lithium niobate (LiNbO3). The surface-acoustic-wave element 9 is attached to the side wall 8b in a portion other than and adjacent to a portion of the side wall 8a where the analyzing light emitted from the light source 10a of the photometer unit 10 comes into or comes out of.

The photometer unit 10 is, as shown in FIG. 1, units for photometry arranged at opposing positions along a radial direction across the recess 6a, and include a light source 10a that emits the analyzing light (340 nm to 800 nm) for analyzing the liquid held in the reaction container 7 and a light receiving unit 10b that receives and splits the analyzing light having passed through the liquid.

The washing device 11 includes a moving unit for moving the reaction container 7, a discharging unit for discharging the liquid, and a dispensing unit for dispensing the cleaning liquid. The washing device 11 moves the reaction container 7 after the photometry to a liquid discharging position, discharges the liquid after the photometry by pressurized air emitted from the discharging unit, and dispenses the cleaning liquid to the recess 6a of the reaction wheel 6 which holds the reaction container 7. The amount of dispensed cleaning liquid is slightly larger than the amount of liquid held in the reaction container 7 at the time of photometry. The washing device 11 returns the reaction container 7 from which the liquid is discharged to the recess 6a to which the cleaning liquid is dispensed, and introduces the cleaning liquid into the reaction container 7 by the capillarity pressure. The washing device 11 repeats these operations plural times and washes the bottom surfaces of the reaction container 7 and the recess 6a. The reaction container 7 thus washed is used again for the analysis of another specimen.

The reagent dispensing mechanism 12 is a unit for dispensing a reagent to the recess 6a formed in the reaction wheel 6, and sequentially dispenses the reagent from a predetermined reagent container 14 on a reagent table 13 to the recess 6a, as shown in FIG. 1.

The reagent table 13 is, as shown in FIG. 1, rotated by a driving unit different from those for the specimen table 3 and the reaction wheel 6 in a direction indicated by an arrow, and has plural storage chambers 13a molded in a fan-like shape and arranged in a circumferential direction. In each of the storage chambers 13a, the reagent container 14 is stored in a detachable manner. Each of the plural reagent containers 14 is filled with a predetermined reagent according to a test item, and a barcode label (not shown) is attached to an outer surface thereof so as to indicate information concerning the stored reagent.

Outside of the outer circumference of the reagent table 13, a reader device 15 is arranged to read out information recorded in the barcode label attached to the reagent container 14, such as type of the reagent, lot, and expiration date, and output the read-out information to a control unit 16. The control unit 16 is connected to the specimen table 3, the specimen dispensing mechanism 5, the reaction wheel 6, the light receiving unit 10b, the washing device 11, the reagent dispensing mechanism 12, the reagent table 13, the reader device 15, an analyzing unit 17, an input unit 18, a display unit 19, and the driving device 20. For example, a micro computer provided with a memory function to store results of analysis is employed as the control unit 16. The control unit 16 controls an operation of each unit of the automatic analyzing apparatus 1, and also controls the automatic analyzing apparatus 1 to stop the work of analysis or give a warning to an operator when the lot, expiration date, and the like of the reagent is not within a set range, based on the information read out from the record in the barcode label.

The analyzing unit 17 is connected to the light receiving unit 10b via the control unit 16, and analyzes, for example, concentration of component in the specimen based on absorbance of the liquid in the reaction container 7 obtained based on light intensity of the light received by the light receiving unit 10b and outputs results of analysis to the control unit 16. The input unit 18 is a unit that performs an operation to input information such as a test item to the control unit 16, and a keyboard, mouse, and the like is employed as the input unit 18. The display unit 19 serves to display contents of analysis, warning, and the like, and a display panel and the like is employed as the display unit 19.

The driving device 20 serves to drive the surface-acoustic-wave element 9, and includes a power transmission body 21 that transmits power to the surface-acoustic-wave element 9 as shown in FIG. 2.

The power transmission body 21 includes an RF transmission antenna 21a, a driving circuit 21b, and a controller 21c. The power transmission body 21 transmits power supplied from a high-frequency, alternate-current power source of approximately a few MHz to a few hundreds MHz from the RF transmission antenna 21a to the surface-acoustic-wave element 9 in the form of electric waves. The RF transmission antenna 21a is attached to an inner surface of the recess 6a of the reaction wheel 6. The driving device 20 switches from one of the RF transmission antennas 21a to the other as an antenna to which the supplied power is output, for example, by operating a switch controlled by the controller 21c. The driving circuit 21b has an oscillating circuit which can change an oscillation frequency based on a control signal supplied from the controller 21c, and outputs a high-frequency oscillation signal of approximately a few tens MHz to a few hundreds MHz to the RF transmission antenna 21a. The controller 21c controls an operation of the driving circuit 21b, and controls, for example, a characteristic (such as characteristics of frequency, strength, phase, and wave), a waveform (such as a sine wave, triangular wave, rectangular wave, and burst wave), modulation (such as amplitude modulation, and frequency modulation) of the sound waves generated by the surface-acoustic-wave element 9. Further, the controller 21c can switch the frequencies of the oscillation signal generated by the driving circuit 21b according to an embedded timer.

The insertion mechanism 23 serves to grab the reaction container 7 arranged in the recess 6a of the reaction wheel 6, and includes as shown in FIG. 1 an arm 23a that is movable in the vertical direction and rotatable in the horizontal direction and a chuck is attached to the arm 23a for grabbing the reaction container 7. The insertion mechanism 23 grabs the reaction container 7 arranged in the recess 6a and retracts the reaction container 7 temporarily when the specimen or the reagent is dispensed, and returns the reaction container 7 to the recess 6a after the dispense.

The automatic analyzing apparatus 1 configured as described above sequentially moves the reaction containers 7 moving along the circumferential direction according to the rotation of the reaction wheel 6 under the control of the control unit 16 to a retracted position before the reaction container 7 reaches a reagent dispensing position. Then, the automatic analyzing apparatus 1 sequentially dispenses a reagent R from a predetermined one of the reagent containers 14 on the reagent table 13 through a nozzle 12a of the reagent dispensing mechanism 12 to the center of each recess 6a under the control of the control unit 16 (see FIG. 3). Thus, the reagent R is dropped onto the affinity region Ra of the recess 6a as shown in FIG. 3. Since the center of the bottom surface of the recess 6a is the affinity region Ra, the dropped reagent forms a semi-spherical droplet in the affinity region Ra and is held in the affinity region Ra.

After dispensing the reagent, the automatic analyzing apparatus 1 rotates the reaction wheel 6 and moves the recess 6a to which the reagent is dispensed to a position close to the specimen dispensing mechanism 5 under the control of the control unit 16. Then, the automatic analyzing apparatus 1 drives the specimen dispensing mechanism 5 under the control of the control unit 16 and dispenses the specimen to the recess 6a from a predetermined one of the specimen containers 4. The reagent R on the affinity region Ra and the dispensed specimen form a quasi-semi-spherical liquid L which is held in the affinity region Ra (see FIG. 4).

After the reagent and the specimen are dispensed, the automatic analyzing apparatus 1 rotates the reaction wheel 6 and moves the recess 6a holding the liquid L to a position close to the insertion mechanism 23 under the control of the control unit 16. The automatic analyzing apparatus 1 makes the insertion mechanism 23 grab and move the reaction container 7 in the retracted position back to the recess 6a under the control of the control unit 16, insert the reaction container 7 from above into the recess 6a to which the reagent and the specimen are dispensed, and place the reaction container 7 on the bottom surface. Then, the reaction container 7 being inserted onto the recess 6a, the opening 8c at the lower portion of the reaction container 7 touches the upper portion of the quasi-semi-spherical liquid L as shown in FIG. 4. Since the reaction container 7 has the opening 8c with a small area and the affinity treatment for the liquid is performed on an interior of the reaction container 7, the liquid L is easily introduced to the inside of the holding member 8 by the capillarity pressure.

After inserting the reaction container 7 into the recess 6a by the insertion mechanism 23 and placing the reaction container 7 on the bottom surface, the automatic analyzing apparatus 1 drives the surface-acoustic-wave element 9 by the driving device 20 under the control of the control unit 16. Then, in the reaction container 7, surface acoustic waves emitted by the transducer 9b of the surface-acoustic-wave element 9 leak out into the held liquid and agitate the liquid L. As a result, the reagent and the specimen in the liquid L react with each other and turn into a reaction liquid Lr.

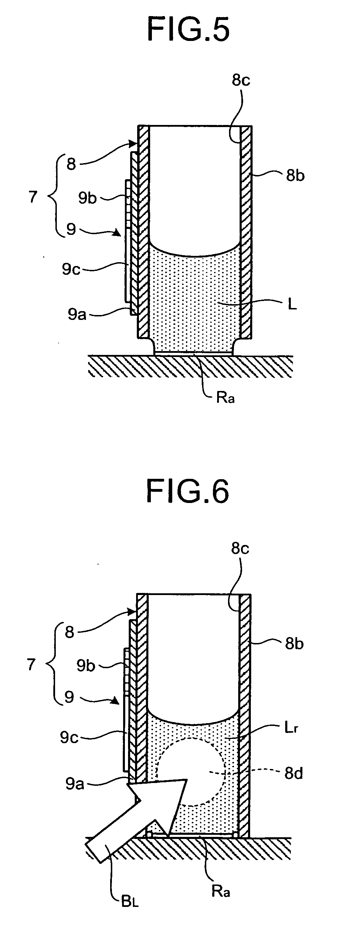

After agitating the liquid L as described above and producing the reaction liquid Lr, the automatic analyzing apparatus 1 rotates the reaction wheel 6 to move the reaction container 7 holding the reaction liquid under the control of the control unit 16. When the reaction container 7 passes by the photometer unit 10, as shown in FIG. 6, photometry is performed on the held reaction liquid Lr by a light flux BL emitted from the light source 10a.

After the photometry, the automatic analyzing apparatus 1 drives the washing device 11 under the control of the control unit 16 to move the reaction container 7 after the photometry to a liquid discharging position. The reaction liquid after the photometry is discharged and the cleaning liquid is dispensed to the recess 6a of the reaction wheel 6 which holds the reaction container 7. Thereafter, the automatic analyzing apparatus 1 returns the reaction container 7 from which the reaction liquid is discharged back to the recess 6a to which the cleaning liquid is dispensed by the washing device 11 under the control of the control unit 16 and introduces the cleaning liquid to the reaction container 7 by the capillarity pressure. The automatic analyzing apparatus 1 makes the washing device 11 repeat these operations plural times under the control of the control unit 16, thereby washing the bottom surface of the recess 6a and the reaction container 7. The reaction container 7 thus washed is used again for the analysis of another specimen.

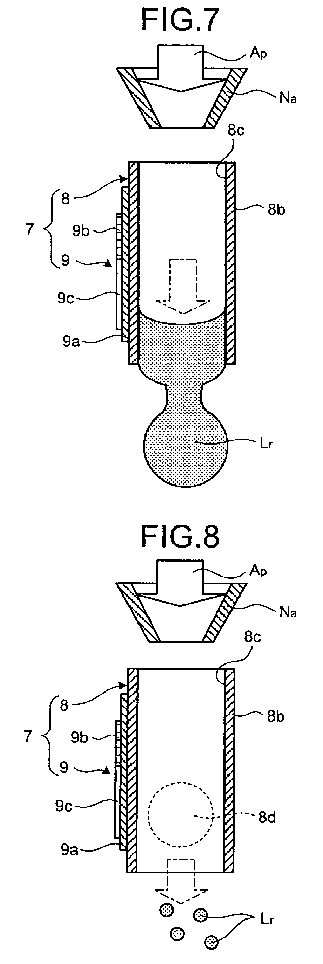

Here, the holding member 8 has the opening 8c with a small area since the holding member 8 introduces the liquid to the inside by the capillarity pressure and holds the introduced liquid by the surface tension. Hence, when the reaction liquid Lr is discharged from the reaction container 7 after the photometry, the discharge is realized with the use of fluid pressure, such as a pressure of a pressurized air. For example, a pressurizing nozzle Na which emits pressurized air Ap is arranged right above the opening 8c as shown in FIG. 7. The reaction container 7 discharges the reaction liquid Lr after the photometry from the holding member 8 to the below as the pressurized air Ap is ejected from the pressurizing nozzle Na as shown in FIG. 8. In this manner, the reaction container 7 can discharge the reaction liquid Lr quickly. In addition, since the pressurizing nozzle Na is not inserted inside, a nozzle of a conventional size can be used as the pressurizing nozzle Na regardless of the size reduction.

As can be seen from the foregoing, since the liquid is introduced from one of the openings 8c of the holding member 8 by the capillarity pressure in the reaction container 7 of the first embodiment, the introduction of the liquid at a time of dispensing, washing, and the like can be easily realized regardless of the size reduction. Further, since the automatic analyzing apparatus 1 uses the reaction container 7, the liquid can be easily introduced. Further, since the introduced liquid is discharged by the fluid pressure, the introduction and discharge of the liquid can be easily performed. Still further, carry-over can be minimized.

A suction nozzle may be employed in place of the pressurizing nozzle for discharging the reaction liquid Lr. When the suction nozzle is brought close to the holding member 8 from above or from below for suction, the reaction liquid Lr can be quickly discharged from the reaction container 7. Further, since the waste liquid is immediately sucked out, contamination in the automatic analyzing apparatus 1 can be prevented.

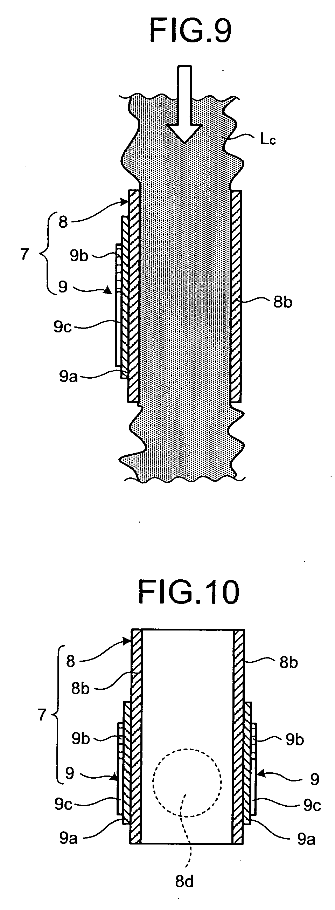

Further, in the reaction container 7, the holding member 8 has the opening 8c on each side. Hence, the reaction container 7 can make a cleaning liquid Lc flow down inside the holding member 8 utilizing the fluid pressure as shown in FIG. 9. Further, problem of insufficient washing which tends to happen at four corners of the bottom portion of a conventional reaction container having a bottom wall can be solved, and carry-over can be eliminated. Still further, the interior of the holding member 8 can be easily washed. In the reaction container 7, when the surface-acoustic-wave element 9 is driven for agitation, the leaked-out sound waves agitate the cleaning liquid Lc and a washing effect can be enhanced.

In the reaction container of the first embodiment, if the surface-acoustic-wave element 9 is attached to each side wall of a set of parallel side walls 8b opposing in the holding member 8 as in the reaction container 7 shown in FIG. 10, the agitation effect of the liquid can be enhanced.

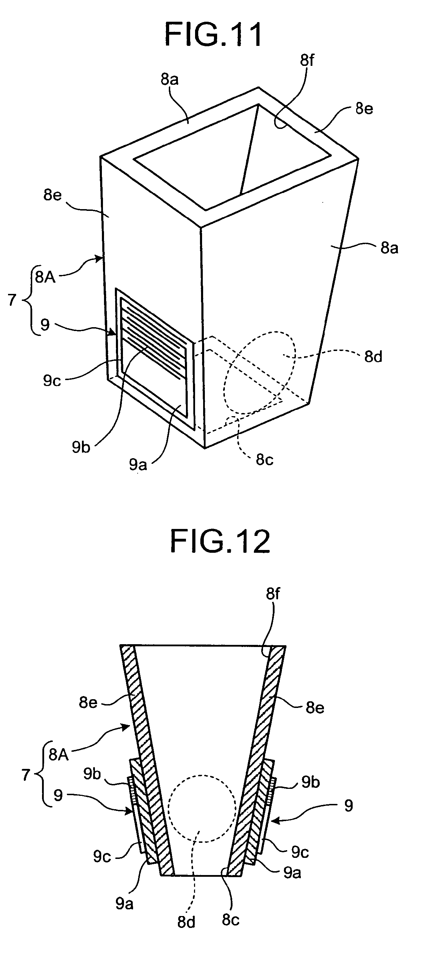

As far as the holding member has opposing openings at two ends thereof and holds the liquid between the openings, the reaction container of the first embodiment may include a holding member 8A which includes a set of sloping walls 8e distancing from each other upward instead of the set of parallel side walls 8b and the surface-acoustic-wave element 9 may be attached to each of the sloping walls 8e as in the reaction container 7 shown in FIGS. 11 and 12. The holding member 8A is molded so that an area of a lower opening 8c is of approximately 0.1 to 20 mm² which is smaller than the area of an upper opening 8f so that the liquid dispensed to the recess 6a of the reaction wheel 6 is introduced to the inside by the capillarity pressure, and an interior of the holding member 8A is subjected to the affinity treatment for the liquid such as a reagent and a specimen. An interior of each of the holding members described below is subjected to the affinity treatment for the liquid such as the reagent and the specimen even when not specifically mentioned.

In the reaction container 7, a chamfered sloping portion P may be formed on an inner circumference of the lower opening 8C of the holding member 8A so that the interior of the holding member 8A narrows to the inside upwardly. Then, the sloping portion P forms a passive valve in the holding member 8A so as to sharpen a concave meniscus of the held liquid, and a force retaining the liquid inside the reaction container 7 inward of the sloping portion P can be made stronger.

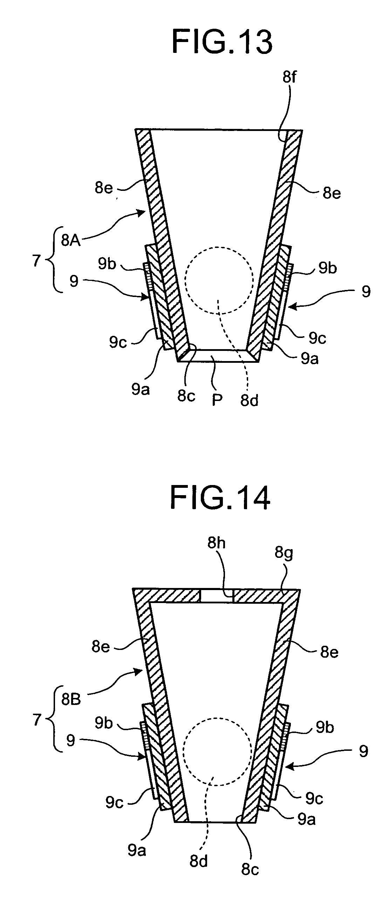

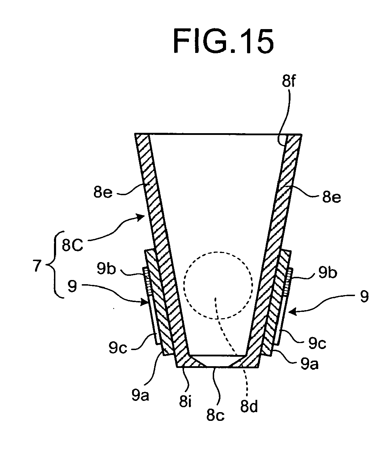

Further, the reaction container of the first embodiment may use a holding member 8B which includes an upper wall 8g at the upper portion of the side wall 8a and the sloping wall 8e and has an opening 8h formed at the center of the upper wall 8g as in the reaction container 7 shown in FIG. 14. Further, as in the reaction container 7 shown in FIG. 15, it is also possible to use a holding member 8C which includes the sloping wall 8e widening upward, a flange 8i protruding inside in the radial direction from the lower portion of each of the side wall 8a and the sloping wall 8e, and the lower-opening 8c formed at the center of the flange 8i.

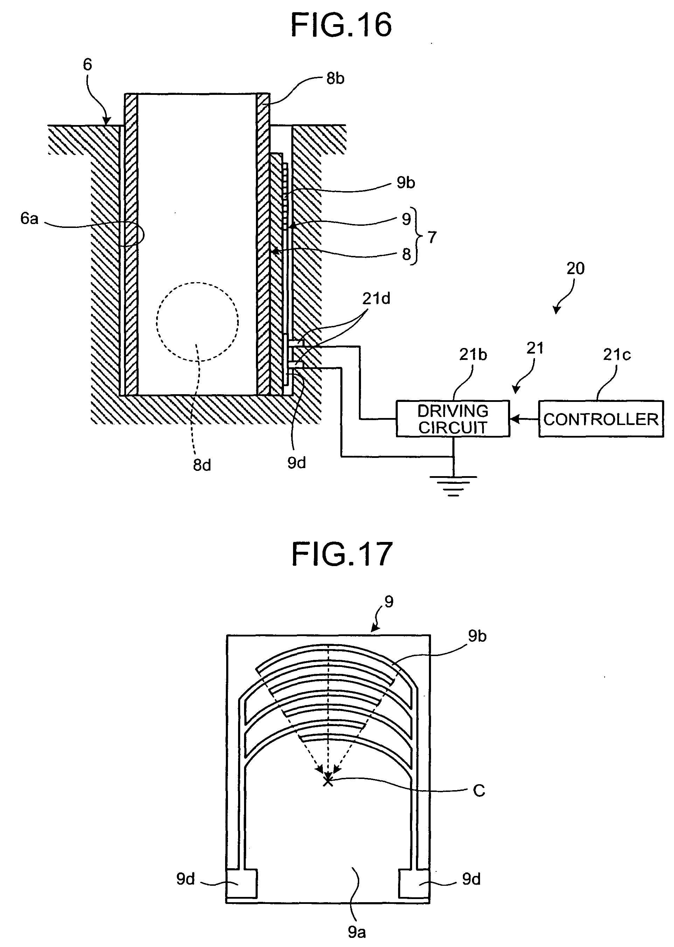

Further, the automatic analyzing apparatus 1 of the first embodiment may supply the power from the driving device 20 to the surface-acoustic-wave element 9 using a contact pin 21d formed on an inner surface of the recess 6a of the reaction wheel 6 as shown in FIG. 16. In this case, the surface-acoustic-wave element 9 includes a contact pad 9d in place of the antenna 9c formed on the piezoelectric substrate 9a. The contact pad 9d is brought into contact with the contact pin 21d as shown in FIG. 17. Further, in the surface-acoustic-wave element 9, plural teeth of the interdigital electrode of the transducer 9b are arranged concentrically and plural teeth become shorter downward so that a center C (focal point) of the plural teeth is in a vertically downward position.

### Second Embodiment

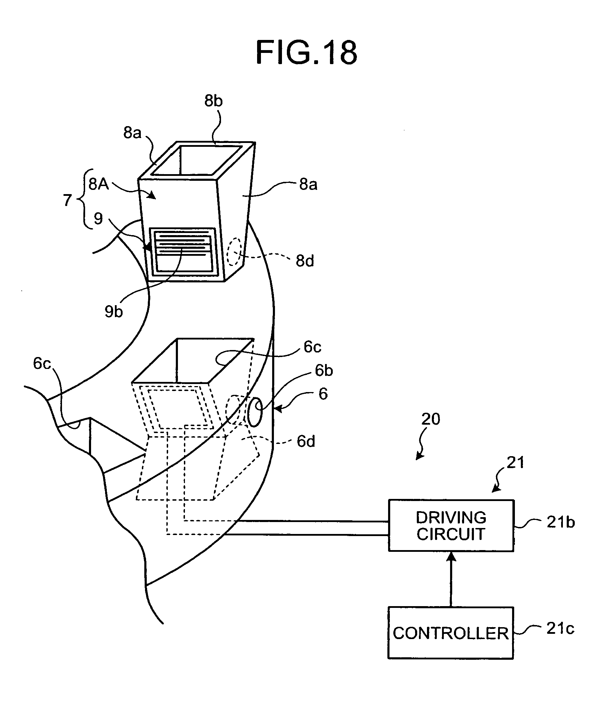

A second embodiment of the reaction container and the analyzing apparatus of the present invention will be described in detail below with reference to the accompanying drawings. The reaction container of the first embodiment is placed on the bottom surface of the recess 6a of the reaction wheel 6. On the other hand, a reaction container of the second embodiment is inserted into the recess 6a of the reaction wheel 6 and placed at a position away from the bottom surface of the recess 6a with the use of the holding member shown in FIG. 13. FIG. 18 is a perspective view of the reaction container of the second embodiment and a part of the reaction wheel shown together with a schematic configuration of an agitation device. Here, the automatic analyzing apparatus 1 is the same with that of the first embodiment except that the shape of the recess is different from that of the recess 6a. Components identical to those in the first embodiment will be denoted by the same reference characters.

In the reaction wheel 6, below a recess 6c to which the holding member 8A of the reaction container 7 is inserted and attached, a recess 6d having sidewalls facing in the circumferential direction and expanding downward toward the bottom wall is formed so as to communicate with the recess 6c. In the reaction wheel 6, the recess 6c is molded in a shape corresponding to the lower portion of the holding member 8A. Hence, when the holding member 8A is inserted and attached to the recess 6c in the reaction wheel 6, the opening 8c in the lower portion is kept away from the bottom surface of the recess 6c.

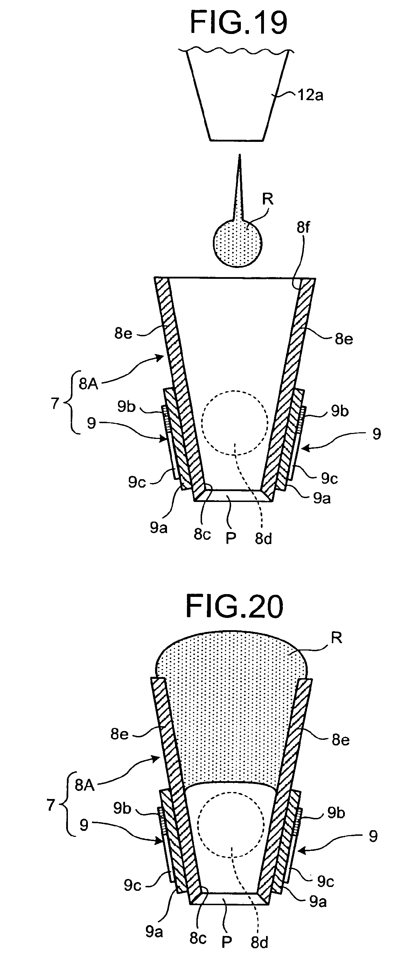

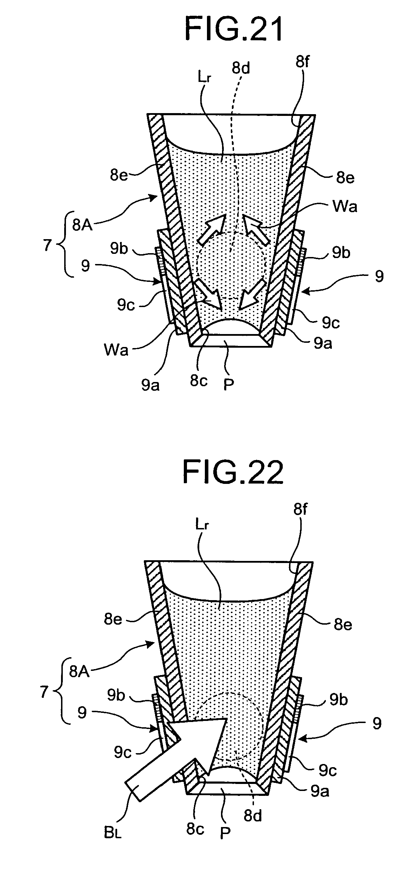

The automatic analyzing apparatus 1 configured as described above sequentially dispenses the reagent R from a predetermined one of the reagent containers 14 on the reagent table 13 through the nozzle 12a of the reagent dispensing mechanism 12 to the holding member 8A of the reaction container 7 which moves along the circumferential direction according to the rotation of the reaction wheel 6 under the control of the control unit 16 (see FIG. 19). At this time, the reagent R immediately after being dispensed clogs the opening 8f in the upper portion of the holding member 8A as shown in FIG. 20. However, since the interior of the holding member 8A is subjected to the affinity treatment for the liquid such as a specimen and a reagent, the reagent R that clogs the opening 8f is introduced inside by the capillarity pressure (see FIG. 21).

After dispensing the reagent, the automatic analyzing apparatus 1 rotates the reaction wheel 6 under the control of the control unit 16 and moves the recess 6a to which the reagent is dispensed to a position near the specimen dispensing mechanism 5. Then, the automatic analyzing apparatus 1 drives the specimen dispensing mechanism 5 under the control of the control unit 16 and dispenses the specimen from a predetermined one of the specimen containers 4 to the recess 6a. Then, the dispensed specimen, though temporarily clogging the opening 8f, is guided by the interior subjected to the affinity treatment and introduced inside by the capillarity pressure similarly to the reagent R, and is combined with the reagent R.

Thereafter, the automatic analyzing apparatus 1 drives the surface-acoustic-wave element 9 by the driving device 20 under the control of the control unit 16. Then, in the reaction container 7, the transducer 9b of the surface-acoustic-wave element 9 generates the surface acoustic waves (sound waves). Surface acoustic waves (sound waves) Wa transmits through the side wall 8e and leak out into the liquid as shown in FIG. 21. In the reaction container 7, the liquid in which the reagent and the specimen are combined is agitated by the sound waves Wa thus leaked out into the liquid. As a result, in the liquid in which the reagent and the specimen are combined, the reagent and the specimen react with each other to form the reaction liquid Lr (see FIG. 21).

At this time, the reaction container 7 is inserted into the reaction wheel 6 and attached while the opening 8c in the lower portion of the holding member 8A is kept away from the bottom surface of the recess 6c. Hence, in the holding member 8A, the liquid combining the reagent and the specimen touches only the inner surfaces of the side wall 8a and the sloping wall 8e. Therefore, in the reaction container 7, a contact area between the liquid held by the holding member 8A and the wall surface decreases in comparison with that in the reaction container having the bottom surface, and the friction with the wall surface decreases, whereby the agitation efficiency is improved.

The automatic analyzing apparatus 1, after agitating the liquid L to produce the reaction liquid Lr, rotates the reaction wheel 6 to move the reaction container 7 holding the reaction liquid under the control of the control unit 16. When the reaction container 7 passes through the photometer unit 10, the held reaction liquid Lr is subjected to the photometry by the light flux BL emitted from the light source 10a as shown in FIG. 22.

After the photometry, the automatic analyzing apparatus 1 drives the washing device 11 to move the reaction container 7 after the photometry to the liquid discharging position, discharges the reaction liquid after the photometry, returns the reaction container 7 back to the recess 6c, and washes the reaction container 7 by dispensing the cleaning liquid under the control of the control unit 16. At this time, the dispensing of the cleaning liquid and the moving of the reaction container 7 to the liquid discharging position are performed at least once. The reaction container 7 thus washed is used again for the analysis of another specimen. Further, when the introduced liquid is discharged from the reaction container 7, the fluid pressure is utilized similarly to the first embodiment.

As can be seen from the above, since the reaction container 7 of the second embodiment employs the holding member 8A and introduces the liquid dispensed to one of the openings 8f of the holding member 8A to the inside by the capillarity pressure, the introduction of the liquid at the dispensing, washing, and the like can be easily performed regardless of the size reduction. Further, since the automatic analyzing apparatus 1 employs the reaction container 7, the introduction of the liquid can be easily performed. Further, since the introduced liquid is discharged by the fluid pressure, the introduction and discharge of the liquid are easily performed and carry-over can be suppressed.

### Third Embodiment

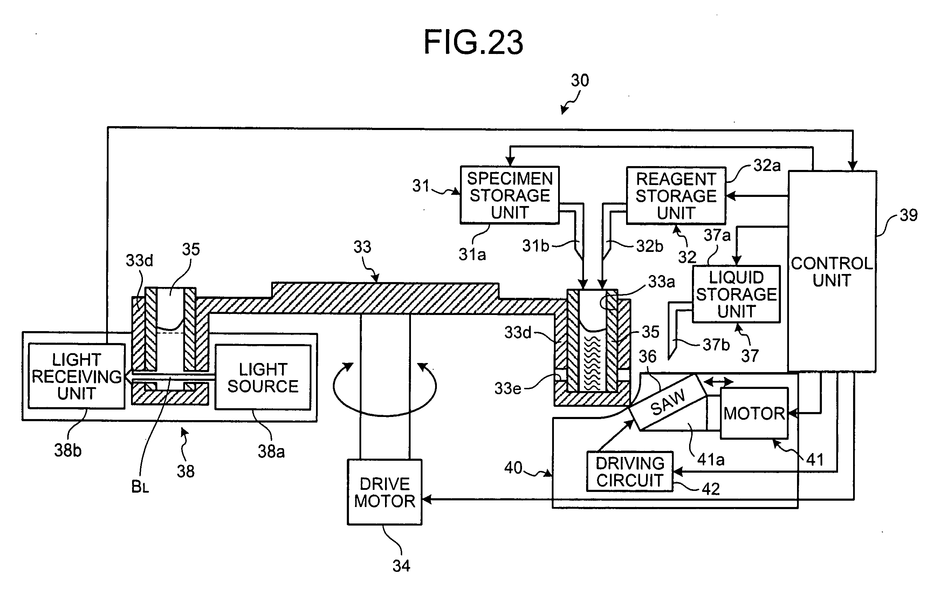

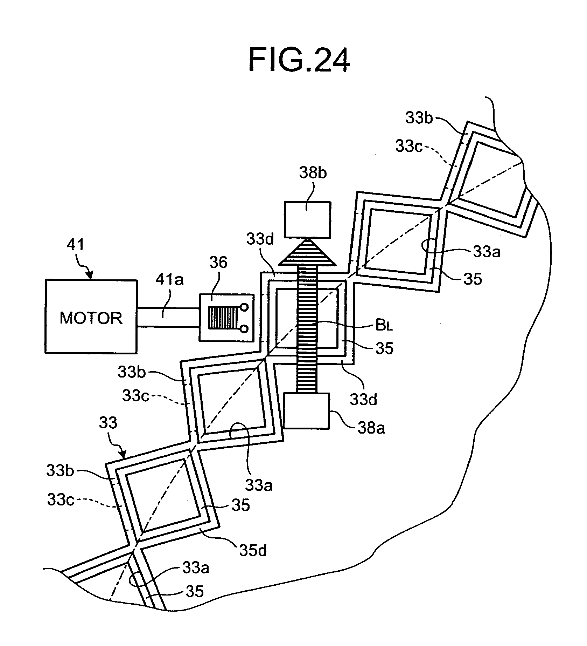

A third embodiment of the reaction container and the analyzing apparatus according to the present invention will be described in detail below with reference to the accompanying drawings. In the reaction containers of the first and the second embodiments, the surface-acoustic-wave element is attached at the side surface. The reaction container of the third embodiment is configured so that the surface-acoustic-wave element is arranged at the side in such a manner that the surface-acoustic-wave element is separated from the side surface and brought into contact with the side surface. FIG. 23 is a block diagram of a configuration of an automatic analyzing apparatus according to the third embodiment where the reaction container and the reaction table are shown in section. FIG. 24 is a plan view of a part of the reaction table employed in the automatic analyzing apparatus of FIG. 23 together with the surface-acoustic-wave element and the driving device.

An automatic analyzing apparatus 30 includes, as shown in FIG. 23, a specimen dispensing unit 31, a reagent dispensing unit 32, a reaction table 33, a surface-acoustic-wave element 36, a photometer unit 38, a control unit 39, and an agitating unit 40.

The specimen dispensing unit 31, as shown in FIG. 23, dispenses the specimen stored in a specimen storage unit 31a to a reaction container 35 through a specimen nozzle 31b. The reagent dispensing unit 32 dispenses the reagent stored in a reagent storage unit 32a to the reaction container 35 through a reagent nozzle 32b. The specimen dispensing unit 31 and the reagent dispensing unit 32 are driven by a driving unit independently, and move above the outer circumference of the reaction table 33 along the surface thereof in two-dimensional directions.

The reaction table 33 is, as shown in FIGS. 23 and 24, rotated by a drive motor 34, and includes plural holders 33a molded in a recess-like shape and arranged in a circumferential direction along the outer periphery. In the holder 33a, the reaction container 35 is stored in a detachable manner. Further, in the reaction table 33, a contact window 33c is formed as an opening at the center of the outer surface of a side wall 33b, and a photometric window 33e is formed in a lower portion of a side wall 33d adjacent to the side wall 33b. Here, the holder 33a is formed so that the side wall 33b in which the contact window 33c is formed is inclined by 45° relative to the radial direction.

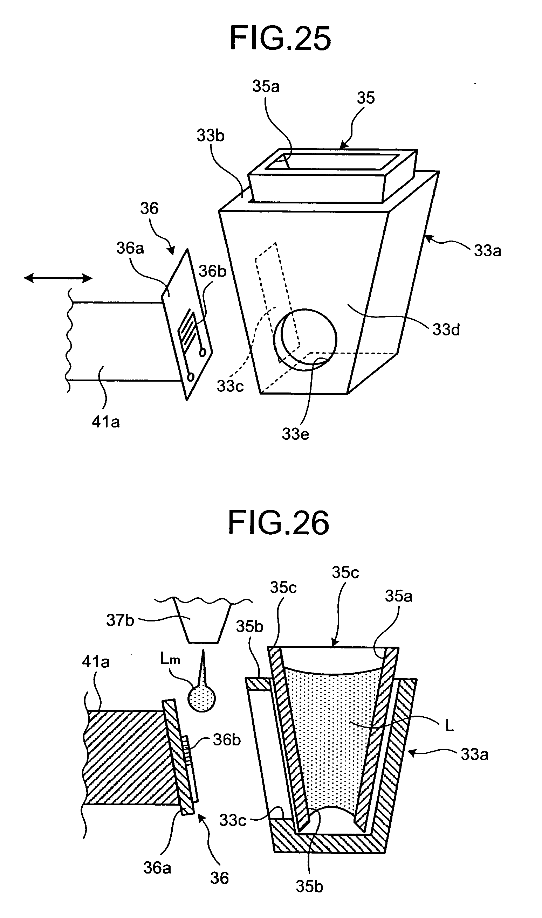

As shown in FIG. 24, plural holders 33a are arranged along the circumferential direction on the outer periphery of the reaction table 33. In FIGS. 26 to 28, however, only one holder 33a is shown for the convenience of description of the structure. Further, as shown in FIG. 23, the surface-acoustic-wave element 36 and the photometer unit 38 are arranged at such position so that they face with each other in the diametrical direction of the reaction table 33. In FIG. 24, however, the surface-acoustic-wave element 36 and the photometer unit 38 are shown arranged close to each other for the simplicity of description and ease of understanding.

The reaction container 35 employs the holding member 8A (see FIG. 13) of the first embodiment which is a rectangular-column-like member for holding a very small amount of liquid of a few nL to a few tens µL between openings 35a and 35b, and further includes the surface-acoustic-wave element 36 arranged close thereto.

The surface-acoustic-wave element 36 is a unit for agitating a liquid held in the reaction container 35 by sound waves (surface acoustic waves). As shown in FIGS. 24 to 26, a transducer 36b of the interdigital electrode (IDT) is formed on a piezoelectric substrate 36a, and the surface-acoustic-wave element 36 is driven by power supplied from a driving circuit 42 in the agitating unit 40 (see FIG. 23). Further, the surface-acoustic-wave element 36 is coupled to an arm 41a driven by a motor 41 in a direction indicated by an arrow as shown in FIG. 23, and comes close to and is brought away from the side wall 35c of the reaction container 35 via the contact window formed in the side wall 33b. The surface-acoustic-wave element 36 is arranged in an inclined state opposite to a side wall 35c of the reaction container 35 held in the holder 33a, and an acoustic matching liquid held in a liquid storage unit 37a of a liquid dispensing unit 37 arranged near the upper portion is dropped from a nozzle 37b.

The photometer unit 38 is, as shown in FIG. 23, arranged at opposing positions across the holder 33a in the radial direction of the reaction table 33, and includes a light source 38a which emits the light flux (see FIG. 24) of the analyzing light (340 nm to 800 nm) for analyzing the liquid held in the reaction container 35, and a light receiving unit 38b which receives and splits the light having passed through the liquid. After the photometry by the photometer unit 38 is finished, the reaction container 35 is transported to the washing device to be washed, and used again for an analysis of another specimen.

The control unit 39 is, as shown in FIG. 23, connected to the specimen dispensing unit 31, the reagent dispensing unit 32, the drive motor 34, the liquid dispensing unit 37, the photometer unit 38, and the agitating unit 40, and for example, a microcomputer having an embedded memory and timer and storing results of analysis is employed as the control unit 39. The control unit 39 controls an operation of each unit of the automatic analyzing apparatus 30, and analyzes concentration of a component and the like of the specimen based on information of transmission light output from the light receiving unit 38b. Further, the control unit 39 is provided with an input unit such as a keyboard and a mouse for performing an operation to input information such as a test item, and a display panel for displaying contents of analysis, warning, and the like.

When the control unit 39 controls the agitating unit 40, the control unit 39 controls characteristic (characteristics such as frequency, strength, phase, and wave), waveform (such as sine wave, triangular wave, rectangular wave, and burst wave), and modulation (such as amplitude modulation, and frequency modulation) of the sound waves generated by the surface-acoustic-wave element 36, for example. Further, the control unit 39 is capable of switching the frequencies of the oscillation signals generated by the driving circuit 42 according to the embedded timer.

The agitating unit 40 is a unit for driving the surface-acoustic-wave element 36 under the control of the control unit 39 and agitating the liquid held in the reaction container 35, and includes, as shown in FIG. 23, the motor 41 and the driving circuit 42.

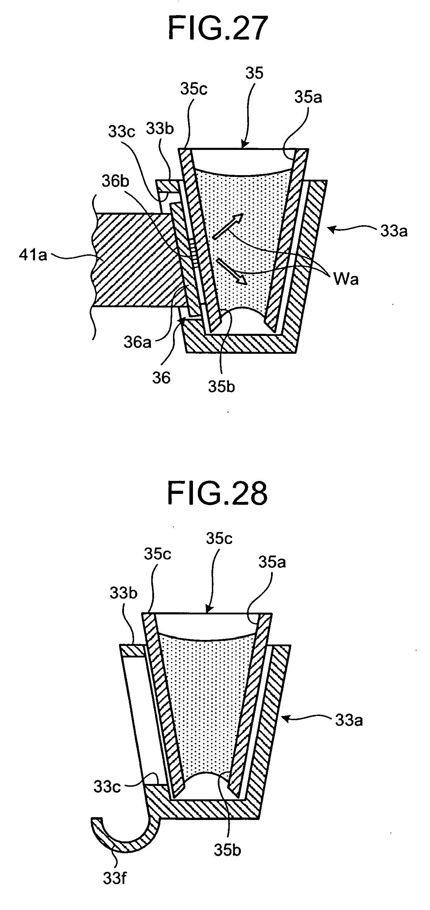

The motor 41 drives the arm 41a under the control of the control unit 39 to move the surface-acoustic-wave element 36 in a direction indicated by an arrow in FIG. 23, and makes the surface-acoustic-wave element 36 contact with the side wall 35c of the reaction container 35 via the contact window 33c of the holder 33a at the time of agitation (see FIG. 27).

The driving circuit 42 has an oscillation circuit whose oscillating frequency is changeable in a programmable manner based on the control signal from the control unit 39. The driving circuit 42 amplifies the high-frequency oscillation signal of approximately a few tens MHz to a few hundreds MHz and outputs the resulting signal as a driving signal to the surface-acoustic-wave element 36. Further, the driving circuit 42 switches the driving frequency of the driving signal stepwise based on the control signal from the control unit 39.

The automatic analyzing apparatus 30 configured as described above analyzes the specimen dispensed to the reaction container 35 in a following manner. Firstly, the automatic analyzing apparatus 30 rotates the reaction table 33 under the control of the control unit 39, and makes the holder 33a holding the reaction container 35 to which the dispensing is to be performed stop at a reagent dispensing position. Then, the automatic analyzing apparatus 30 dispenses a first reagent to the opening 35a from above the reaction container 35 through the reagent nozzle 32b by the reagent dispensing unit 32 under the control of the control unit 39. Thus, in the reaction container 35 of the third embodiment, even when the dispensing of the liquid is performed from above, the liquid is introduced inside by the capillarity pressure similarly to the second embodiment.

Then, the automatic analyzing apparatus 30 rotates the reaction table 33 under the control of the control unit 39 and moves the reaction container 35 to which the first reagent is dispensed to the photometer unit 38. Then, the analyzing light emitted from the light source 38a comes into the reaction container 35 through the photometric window 33e in the lower portion of the holder 33a, and a light flux passing through the first reagent is subjected to photometry by the light receiving unit 38b. The light receiving unit 38b outputs light information concerning the received light flux to the control unit 39. The control unit 39 calculates and stores the absorbance of the first reagent based on the light information.

After a blank photometry of the first reagent is finished as described above, the automatic analyzing apparatus 30 drives the drive motor 34 and rotates the reaction table 33 under the control of the control unit 39, and moves the reaction container 35 to which the first reagent is dispensed to the specimen dispensing unit 31. Then, the automatic analyzing apparatus 30 dispenses the specimen through the specimen nozzle 31b to the reaction container 35 under the control of the control unit 39.

The automatic analyzing apparatus 30 drives the transducer 36b by the driving circuit 42 under the control of the control unit 39, and agitates the first reagent and the specimen by generated sound waves (surface acoustic waves) to cause reaction. Thereafter, the automatic analyzing apparatus 30 drives the drive motor 34 to rotate the reaction table 33 and moves the reaction container 35 to the photometer unit 38 under the control of the control unit 39. Thus, the reaction liquid which is obtained as a result of reaction of the first reagent and the specimen is subjected to photometry in the reaction container 35. The control unit 39 calculates and stores the absorbance of the reaction liquid obtained as a result of reaction between the first reagent and the specimen based on the light information obtained as a result of photometry by the light receiving unit 38b.

Then, the automatic analyzing apparatus 30 drives the drive motor 34 and rotates the reaction table 33 under the control of the control unit 39 and moves the reaction container 35 holding the reaction liquid of the first reagent and the specimen to the reagent dispensing unit 32. Thereafter, the automatic analyzing apparatus 30 dispenses a second reagent through the reagent nozzle 32b to the reaction container 35 under the control of the control unit 39. Then, under the control of the control unit 39, the automatic analyzing apparatus 30 drives the motor 41 to extend the arm 41a, and drives the transducer 36b by the driving circuit 42 to agitate the reaction liquid of the first reagent and the specimen and the second reagent by the generated sound waves (surface acoustic waves) to cause reaction.

Thereafter, under the control of the control unit 39, the automatic analyzing apparatus 30 drives the motor 41 to pull in the extended arm 41a and drives the drive motor 34 to rotate the reaction table 33 and moves the reaction container 35 to the photometer unit 38. Thus, the reaction liquid obtained as a result of reaction between the reaction liquid of the first reagent and the specimen and the second reagent is subjected to photometry in the reaction container 35. The control unit 39 calculates absorbance of the reaction liquid obtained as a result of reaction between the reaction liquid of the first reagent and the specimen and the second reagent based on the light information obtained through the photometry by the light receiving unit 38b, and calculates concentration of a component of the specimen and the like based on the previously measured absorbance of the first reagent and the absorbance of a combined liquid of the first reagent and the specimen. After the photometry by the photometer unit 38 is finished, the reaction container 35 is transported to the washing device and the reaction liquid is discharged. After being washed, the reaction container 35 is used again for an analysis of another specimen. When the reaction liquid is discharged from the reaction container 35, the fluid pressure is utilized similarly to the first embodiment.

On agitating the liquid by the surface-acoustic-wave element 36, the automatic analyzing apparatus 30 drops an acoustic matching liquid Lm to the surface-acoustic-wave element 36 from the nozzle 37b of the liquid dispensing unit 37 under the control of the control unit 39 as shown in FIG. 26. In the holder 33a, the reaction container 35 holding the liquid L is inserted and attached. Then, the automatic analyzing apparatus 30 extends the arm 41a by the motor 41 under the control of the control unit 39, and makes the surface-acoustic-wave element 36 contact with the side wall 35c of the reaction container 35 via the contact window 33c as shown in FIG. 27. Thus, a thin film of the acoustic matching liquid Lm is arranged between the surface-acoustic-wave element 36 and the side wall 35c. Therefore, the sound waves (surface acoustic waves) generated by the surface-acoustic-wave element 36 leak out into the held liquid L through the side wall 35c of the reaction container 35, and the leaked out sound waves Wa agitate the liquid L.

As can be seen from the above, since the reaction container 35 of the third embodiment introduces the liquid dispensed to one of the openings 35a to the inside by the capillarity pressure, the introduction of a liquid at the dispensing, washing, and the like can be easily performed regardless of the size reduction. Further, since the automatic analyzing apparatus 30 employs the reaction container 35, the introduction of the liquid can be easily performed. Further, since the introduced liquid is discharged by the fluid pressure, the introduction and the discharge of the liquid can be easily performed and the carry-over can be suppressed.

When the acoustic matching liquid Lm has a low viscosity, it tends to flow. Hence, as shown in FIG. 28, the holder 33a preferably includes a skirt portion 33f in a lower portion at the side of the contact window 33c so as to receive the acoustic matching liquid Lm dropped onto the surface-acoustic-wave element 36.

### Fourth Embodiment

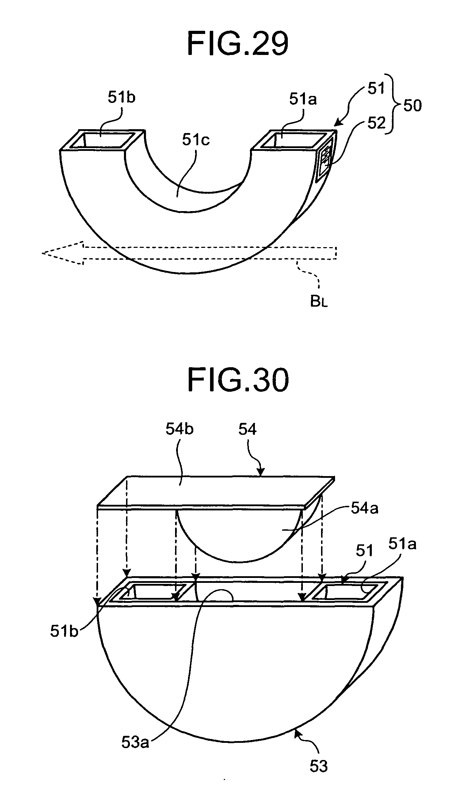

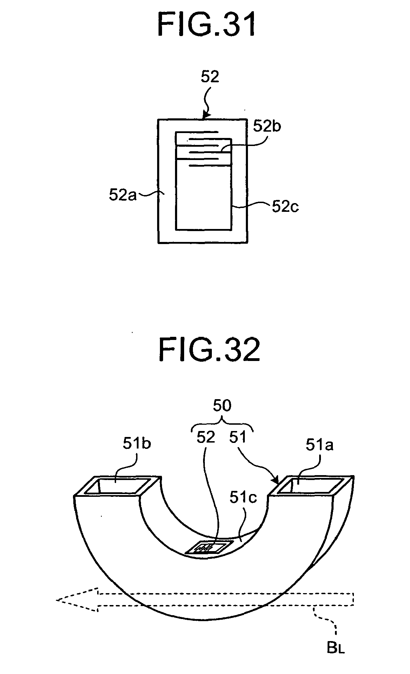

A fourth embodiment of the reaction container according to the present invention will be described in detail below with reference to the accompanying drawings. The reaction containers of the first to the third embodiments have openings arranged opposite to each other. The reaction container of the fourth embodiment includes two openings arranged at two ends of a U-like shape so as to serve as introduction/discharge ports of the liquid. FIG. 29 is a perspective view of the reaction container of the fourth embodiment. FIG. 30 is a perspective view of the reaction container of FIG. 29 shown together with the holder holding the reaction container. FIG. 31 is a front view of the surface-acoustic-wave element employed in the reaction container shown in FIG. 29.

A reaction container 50 includes, as shown in FIG. 29, a holding member 51 and a surface-acoustic-wave element 52.

The holding member 51 includes openings 51a and 51b serving as introduction/discharge ports of the liquid at two ends of a U-shaped pipe material, and holds the liquid in a U-shaped portion between the openings 51a and 51b. The openings 51a and 51b are molded to have an area of 0.1 to 20 mm². The holding member 51 is placed in a holder 53 shown in FIG. 30, inserted into each of plural recesses formed on the reaction table and attached thereto. The holder 53 is a cylindrical member with a semi-circular section formed as a half of a flat cylinder, and includes a storage unit 53a for storing the holding member 51 and keeping the holding member 51 at a constant temperature. A lid 54 covers the holder 53 from above. The lid 54 includes a protrusion 54a fitted into the recess 51c of the holding member 51 stored in the holder 53 and a lid plate 54b holding the protrusion 54a and covering an opening not used for dispensing the liquid, such as the opening 51b. The lid 54 keeps the liquid held in the holding member 51 at a constant temperature by covering the holder 53.

The surface-acoustic-wave element 52 is attached to an arch-like curved side surface near the opening 51a via the acoustic matching layer. As shown in FIG. 31, a transducer 52b of an interdigital electrode (IDT) and a reception antenna 52c are formed on a piezoelectric substrate 52a similarly to the surface-acoustic-wave element 9. To the surface-acoustic-wave element 52, power for driving the transducer 52b is supplied by high-frequency radio from a transmission antenna arranged outside the holder 53. The transmission antenna is arranged opposite to the surface-acoustic-wave element 52 attached to the holding member 51 inserted and attached. As far as the transmission antenna opposes to the surface-acoustic-wave element 52, the transmission antenna may be arranged inside the holder 53.

As can be seen from above, since the holding member 51 of the reaction container 50 has the openings 51a and 51b serving as the introduction/discharge ports of the liquid, the introduction of the liquid can be easily performed, and at the time of discharge, the liquid can be easily discharged with the use of the pressurizing nozzle and the suction nozzle as in the above described embodiments. In the reaction container 50, the light flux BL illuminates from the curved side surface as shown by dotted line in FIG. 29 at the time of photometry. However, the light flux BL may illuminate from a plane adjacent to the curved side surface to which the surface-acoustic-wave element 52 is attached.

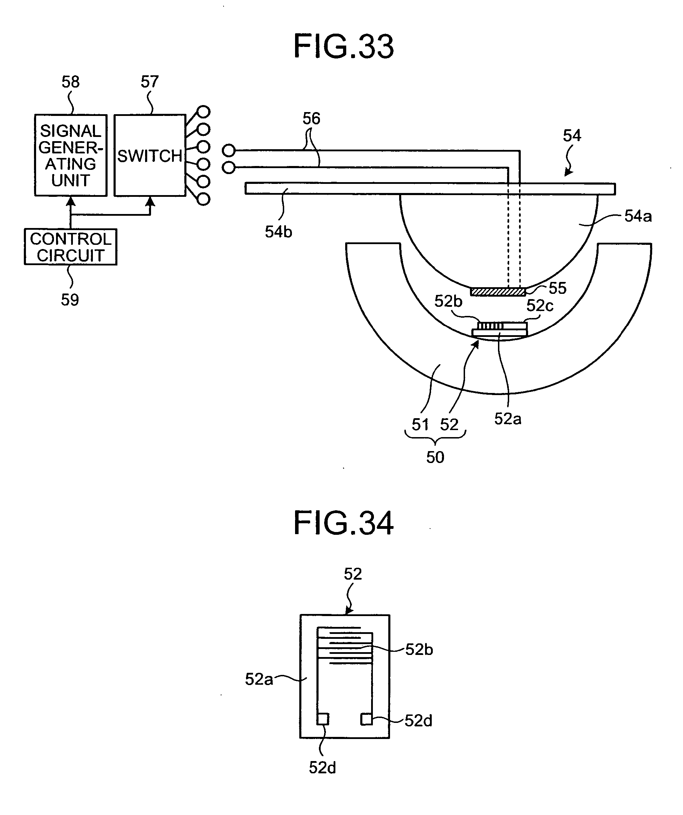

Here, in the reaction container 50, the surface-acoustic-wave element 52 may be attached to the upper surface of the recess 51c of the holding member 51 as shown in FIG. 32. In this case, as shown in FIG. 33, the power for driving the transducer 52b is supplied to the surface-acoustic-wave element 52 by high-frequency radio from the transmission antenna 55 arranged outside the protrusion 54a of the lid 54. The transmission antenna 55 is connected to a signal generating unit 58 via a wiring 56 and a switching circuit 57. The surface-acoustic-wave element 52 of a specific one of the plural reaction containers 50 is selected according to a control signal from a control circuit 59 and driven.

As shown in FIG. 34, the surface-acoustic-wave element 52 may include an electrode pad 52d instead of the reception antenna 52c so as to supply the power from the power source via the electrode pad 52d.

### INDUSTRIAL APPLICABILITY

As can be seen from the foregoing, the reaction container and the analyzing apparatus of the present invention are useful for a use in an analyzing apparatus, and particularly suitable for a use in an automatic analyzing apparatus since they allow for an easy introduction of a liquid at dispensing, washing, and the like regardless of a reduced size of the reaction container.

## Claims

1. A reaction container holding a liquid agitated by sound waves, comprising:
two openings which serve as an introduction/discharge port of the liquid; and
a holding member which has the two openings, holds the liquid between the two openings, and includes a sound wave generator arranged on one of a side surface and a portion close to the side surface for emitting sound waves to a portion between the two openings to agitate the liquid.

2. The reaction container according to claim 1, wherein the two openings are arranged opposite to each other.

3. The reaction container according to claim 2, wherein
the holding member is arranged in a vertical direction, and
a lower one of the two openings in the vertical direction has an area smaller than an area of an upper one of the two openings in the vertical direction.

4. The reaction container according to claim 3, wherein
the holding member has such a contact angle that a size of a vertical component of a surface tension of the liquid is equal to or larger than a gravitational force working on the liquid held.

5. The reaction container according to claim 2, wherein
the liquid is introduced into the holding member from one of the openings by a capillarity pressure.

6. The reaction container according to claim 1, wherein
the liquid is discharged from the holding member from another one of the openings different from the one from which the liquid is introduced.

7. The reaction container according to claim 1, wherein
the holding member includes at least two side walls parallel to each other for defining a light path length of light passing through the liquid held.

8. The reaction container according to claim 1, wherein
an inner surface of the holding member has a higher affinity with the liquid than other portions of the holding member.

9. The reaction container according to claim 1, wherein
the sound wave generator is arranged in such a manner that the sound wave generator can be brought close to and away from the holding member by a contact.

10. The reaction container according to claim 1, wherein
the sound wave generator is a surface-acoustic-wave element.

11. An analyzing apparatus that agitates plural different types of liquid to cause-reaction, measures an optical characteristic of an obtained reaction liquid, and analyzes the reaction liquid, the analyzing apparatus using the reaction container according to any one of claims 1 to 10 to agitate the plural different types of liquid to cause reaction and optically analyze the reaction liquid.

12. The analyzing apparatus according to claim 11, further comprising
a discharging unit that discharges the liquid held by the holding member, wherein
the discharging unit is shared by the plural reaction containers.

13. The analyzing apparatus according to claim 12, wherein
the discharging unit is a pressure applying unit which discharges the liquid held by the holding member by fluid pressure.
